# EUROPÄISCHE PATENTSCHRIFT

(11) **EP 2 241 864 B1**
(45) Veröffentlichungstag und Bekanntmachung des Hinweises auf die Patenterteilung: **08.08.2018**
(21) Anmeldenummer: 10003843.9
(22) Anmeldetag: 10.04.2010
(51) Int. Cl.: G01F 1/44, G01F 15/18, G01F 1/36

(54) **Vorrichtung zur Messung des Volumens- oder Messestromes eines Mediums mittels Differenzdrucksensors mit einer Verbindungsvorrichtung für den Sensor**
Device for measuring the flowrate of a fluid by means of a pressure difference sensor with corresponding connecting means for the sensor
Dispositif de mesure du débit d'un fluid avec un dispositif de liaison pour le capteur

(30) Priorität: 14.04.2009 DE 102009017335
(43) Veröffentlichungstag der Anmeldung: 20.10.2010
(73) Patentinhaber: Hydrotechnik GmbH, 65549 Limburg a. d. Lahn (DE)
(72) Erfinder: Hofmann, Manfred, 65624 Altendiez (DE)
(74) Vertreter: Müller, Eckhard

(56) Entgegenhaltungen:
- EP-A1- 0 233 302
- EP-A2- 1 464 928
- DD-A1- 239 665
- JP-U- H0 255 123
- US-A- 4 672 728
- US-A1- 2002 040 607
- US-B1- 6 324 917

## Beschreibung

### Technisches Gebiet

Die Erfindung betrifft eine Vorrichtung nach dem Anspruch 1 sowie eine Maschine mit einer solchen Vorrichtung zur Messung des Volumen- oder Massestromes eines Mediums nach dem Wirkdruckverfahren, mit einem drucktragenden Gehäuseteil mit einer Messstrecke, in die wenigstens zwei Wirkdruckkanäle münden, wobei ein mit den Wirkdruckkanälen in Wirkverbindung bringbarer Differenzdrucksensor vorgesehen ist.

### Stand der Technik

Zur Messung eines Volumen- und Massestroms sind im Stand der Technik verschiedene Vorrichtungen bekannt, die nach unterschiedlichen Wirkprinzipien arbeiten. Die Durchflussmessung nach dem Wirkdruckverfahren ist hierbei das am meisten angewandte Verfahren, unter anderem, da zur Messung des Volumen- oder Massestroms eines zu messenden Mediums keine bewegten Bauteile in den Strom eingebracht werden müssen.

Das Wirkdruckverfahren basiert auf der Messung wenigstens zweier Absolutdrücke, die in dem Fluidsystem herrschen, entlang einer Messstrecke. In der Messstrecke ist meist eine Vorrichtung vorgesehen, welche streckenweise den Strömungsquerschnitt verändert. Hierdurch wird eine von dem Volumen- oder Massestrom abhängige Druckdifferenz erzeugt, die als Messgröße herangezogen wird.

Eine Vorrichtung der eingangs genannten Art ist beispielsweise in der DE 37 10 968 C2 offenbart. Die dortige Vorrichtung weist eine Messstrecke mit mindestens einer austauschbaren Messblende und Messanschlüssen auf beiden Wirkdruckseiten der Messblende auf, an welche Drucksensoren anschließbar sind. Die Messanschlüsse sind als unter dem Betriebsdruck mit den Anschlüssen der Drucksensoren kuppelbare, gleichartige Kupplungen ausgebildet und die Drucksensoren mit einem prozessorgesteuerten Auswertegerät galvanisch verbunden. Als Drucksensoren werden einfache Drucksensoren verwendet.

Nachteilig hieran ist der erhöhte Montageaufwand, da zur Messung mehrerer Drucksensoren eingebaut und galvanisch mit einem Auswertegerät verbunden werden müssen. Darüber hinaus ist eine Eichung der Drucksensoren notwendig und damit auch eine Zuordnung eines bestimmten Drucksensors zu einem bestimmten Anschluss.

Darüber hinaus sind Vorrichtungen der eingangs genannten Art mit sogenannten Differenzdrucksensoren bekannt. Die aus dem Stand der Technik bekannten Vorrichtungen zur Messung des Volumen- oder Massenstromes, die Differenzdrucksensoren verwenden, weisen jedoch den Nachteil auf, dass sie regelmäßig für den Festeinbau ausgebildet sind, sodass die bekannten Differenzdrucksensoren stets montiert sind. Differenzdrucksensoren sind jedoch vergleichsweise empfindlich und haben in vielen Maschinen aufgrund der dortigen Druckverhältnisse und mechanischen Belastungen eine geringe Standfestigkeit.

Aus diesem Grund ist im Stand der Technik weiterhin bekannt, die Vorrichtungen nur zur Durchführung einer Messung zu montieren, was jedoch den Nachteil hat, dass hierzu die Maschine angehalten werden muss, und dass beim Ein- und Ausbau der Vorrichtung das mediumtragende System geöffnet werden muss. Ein Austritt des Mediums, z.B. Öl, ist daher die Folge. Des Weiteren ist die Montage sehr aufwendig und wird daher in der Praxis häufig vermieden.

Aus DE 696 29 388 T2 ist ein Verfahren zur Installierung eines Druckdifferenzumsetzers bekannt, bei dem der Druckdifferenzumsetzer über eine Bolzenschraubverbindung und Standardinstrumentenflansche mit O-Ring-Dichtung anschließbar ist. Auch dieses Verfahren hat den Nachteil, dass die Montage sehr aufwendig ist und diese daher in der Praxis häufig vermieden wird.

Die DD 239 665 A1 offenbart eine Überdruckfühlersicherung, insbesondere für elektronische Durchflussmesser, in welcher ein Differenzdruck an einer Venturidüse erzeugt wird.

Die JP 2-55123 U offenbart eine Vorrichtung zur Differenzdruckmessung zum Messen eines Rohrdurchflusses.

Die US 6,324,917 B1 offenbart eine Verbindungseinrichtung für den Anschluss an ein Druckluftrohr zum Zwecke einer Durchflussmessung.

Die EP 1 464 928 A2 offenbart eine Durchfluss-Messeinrichtung mit einem Druckabfall-Erzeugungsmittel in einem von einem Druckmedium durchströmten Kanal.

Die US 4,672,728 A offenbart eine Differenzdruckmesseinheit mit einem abnehmbaren Rohranschluss.

Die US 2002/0040607 A1 offenbart eine Vorrichtung für die Durchführung einer Differenzdruckmessung.

Die EP 0 233 302 A1 offenbart eine Vorrichtung für eine Absolutdruckmessvorrichtung für Baumaschinen, bei welcher Druckkanäle, die zu unterschiedlichen Messpunkten führen, über eine Sammelvorrichtung verbunden sind. Die Sammelvorrichtung ist mit unter Betriebsdruck betätigbaren Mehrfachschnellkupplungen mit einem Dosen- und einem Steckerstück ausgebildet. Eine Vielzahl von Druckkanälen ist dabei mit einer Vielzahl von Messvorrichtungen zur Erfassung der einzelnen Drücke an den einzelnen Messpunkten verbunden.

Die DE 37 10 968 C2 offenbart eine Vorrichtung zur Messung des Volumen- oder Massestroms, die sich dadurch auszeichnet, dass Messanschlüsse als unter Betriebsdruck mit Anschlüssen von Drucksensoren kuppelbare, gleichartige Kupplungen ausgebildet sind und die Drucksensoren mit einem Prozessor gesteuerten Auswertgerät galvanisch verbunden sind.

### Aufgabe

Hiervon ausgehend liegt der Erfindung die Aufgabe zugrunde, eine Vorrichtung der eingangs genannten Art dahingehend zu verbessern, dass sie die Nachteile des Standes der Technik überwindet und eine montage- und verfahrenstechnisch einfach durchzuführende Messung des Volumen- oder Massenstroms eines Mediums erlaubt.

### Darstellung der Erfindung

Die Aufgabe wird gelöst durch eine Vorrichtung gemäß Anspruch 1 sowie eine Maschine gemäß dem nebengeordneten Anspruch 11.

### Vorteilhafte

Ausgestaltungen der Erfindung sind Gegenstand der Unteransprüche.
Eine erfindungsgemäße Vorrichtung zur Messung des Volumen- oder Massestromes eines Mediums, beispielsweise eines Fluids, wie Öl oder dergleichen, welche nach dem Wirkdruckverfahren arbeitet, weist ein drucktragendes Gehäuseteil mit einer Messstrecke auf, entlang derer mehrere Wirkdrücke gemessen werden. Zum Abgreifen der Wirkdrücke sind wenigstens zwei Wirkdruckkanäle vorgesehen, die in die Messstrecke münden. Zur Messung einer Wirkdruckdifferenz ist ein mit den Wirkdruckkanälen in Druckübertragungsverbindung bringbarer Differenzdrucksensor vorgesehen. Mit Hilfe des Differenzdrucksensors kann in an sich bekannter Weise eine Druckdifferenz entlang der Messstrecke festgestellt werden.

Erfindungsgemäß ist vorgesehen, dass die Wirkdruckkanäle über eine gemeinsame Kupplung mit einer Gegenkupplung des Differenzdrucksensors verbindbar und dass Mittel zum lage- bzw. positionssicherem Anschließen der Wirkdruckkanäle mit dem Differenzdrucksensor vorgesehen sind. Der Differenzdrucksensor ist somit von dem drucktragenden Gehäuseteil in einfacher Weise abnehmbar und in gleicher Weise anschließbar. Damit wird der Vorteil erreicht, dass der Differenzdrucksensor nur dann an der Messstrecke montiert sein muss, wenn tatsächlich eine Messung vorgenommen wird. Gleichzeitig wird vermieden, dass zur Anbringung der Vorrichtung zur Messung der mediumführende Teil, dessen Volumen- oder Massenstrom an Medium gemessen werden soll, geöffnet werden muss. Auch ist durch die Erfindung vermieden, dass mehrere Einzelsensoren montiert werden müssen. Durch die Ausbildung von Mitteln zum lagesicheren Verbinden der Wirkdruckkanäle mit dem Drucksensor ist verhindert, dass die Sensoren in falscher Anordnung montiert werden und dadurch ein falsches Messergebnis erzeugt wird. Das drucktragende Gehäuse kann integraler bzw. fester Bestandteil einer Maschine oder Vorrichtung sein.

Gemäß einer ersten Weiterbildung der Erfindung weist die Kupplung ein mit dem Gehäuseteil verbundenes, die Wirkdruckkanäle umfassendes Anschlussstück zum Anschluss des Differenzdrucksensors auf. Mit Hilfe des Anschlussstücks kann der Differenzdrucksensor besonders leicht an dem drucktragenden Gehäuseteil montiert werden.

Der Anschluss lässt sich montagetechnisch besonders einfach dann erreichen, wenn auch die Gegenkupplung ein die Messkanäle des Differenzdrucksensors umfassendes Gegenanschlussstück aufweist, so dass ein einfaches und schnelles Anschließen und Abnehmen des Differenzdrucksensors erreicht ist.

Gemäß der Erfindung sind Mittel zum Kuppeln der Wirkdruckkanäle mit dem Differenzdrucksensor unter Betriebsdruck vorgesehen. Hierdurch ist der Differenzdrucksensor an das drucktragende Gehäuseteil anschließbar oder auch abnehmbar, sodass es zu keinem Medium- oder Ölverlusten während des Anschließens und Abnehmens des Differenzdrucksensors kommt. Die Drucksensoren sind daher bei den jeweils geltenden Betriebsbedingungen bei beliebigem Referenzdruck sowohl in Nullabgleichschaltung als auch in Messstellung bringbar. Ein Anlagenstillstand bei Kuppeln oder Abnahme der Messvorrichtung tritt nicht ein.

Gemäß der Erfindung sind als Mittel zum Kuppeln der Wirkdruckkanäle Rückschlagventile vorgesehen, die mechanisch entsperrbar sind. Mit Hilfe derartiger Rückschlagventile kann die jeweilige Wirkdruckleitung besonders einfach abgesperrt werden, wenn kein Differenzdrucksensor montiert ist.

Wenn das oder die Rückschlagventile darüber hinaus mechanisch entsperrbar sind, kann eine Entsperrung des Rückschlagventils und damit eine Öffnung der Wirkdruckkanäle durch Montage des Durchflusssensors erreicht werden. Auf diese Weise lässt sich besonders einfach eine Wirkverbindung zwischen den Wirkdruckkanälen und dem Differenzdrucksensor erzielen. An dem Differenzdrucksensor ist daher die Öffnungsarmatur der Rückschlagventile als integraler Bestandteil angeordnet, was die Handhabung beim Anschließen und Abnehmen des Differenzdrucksensors nochmals vereinfacht.

Der Differenzdrucksensor weist gemäß der Erfindung Dichtnippel auf, über die der Differenzdrucksensor in auf dem Gehäuseteil befestigter Stellung mit den Wirkdruckkanälen wirkverbindbar ist. Mit Hilfe der Dichtnippel lässt sich eine sichere Abdichtung der Verbindung zwischen Differenzdrucksensor und Wirkdruckkanälen erzielen.

Die Dichtnippel sind bevorzugt als Hohlzapfen ausgebildet, die in Montagestellung des Differenzdrucksensors an der Messstrecke in das Anschlussstück des drucktragenden Gehäuseteils hineinragen. Hiermit lässt sich eine besonders gute Abdichtung der Anbindung erreichen.

Wenn die Hohlzapfen darüber hinaus dazu ausgebildet sind, die gemäß der Erfindung vorgesehenen mechanisch entsperrbaren Rückschlagventile zu entsperren, lässt sich eine besonders einfache Montage des Differenzdrucksensors verwirklichen.

Des Weiteren ist zur Abdichtung von Gehäuseteil und Differenzdrucksensor in Montagestellung wenigstens ein O-Ring vorgesehen, der eine druckdichte Anbindung von Differenzdrucksensor am Gehäuseteil ermöglicht.

Dabei sind die vorzugsweise als O-Ringe ausgebildeten Dichtungen derart angeordnet, dass beim Anschließen des Differenzdrucksensors die Dichtnippel mit den gehäuseseitigen Dichtungen in Wirkstellung treten, bevor die Rückschlagventile in Öffnungsstellung gelangen. Dies erweist sich als besonders effektive und konstruktiv vorteilhafte Maßnahme, um das Kuppeln der Wirkdruckkanäle mit dem Differenzdrucksensor unter Betriebsdruck vornehmen zu können. Sowohl beim Ankuppeln als auch bei Abnahme der Messvorrichtung tritt kein Anlagenstillstand ein. Ein Medium- oder Ölverlust während der Ein- und Ausbauarbeiten des Differenzdrucksensors tritt damit nicht mehr auf.

Gemäß einer Weiterbildung der Erfindung weist das Anschlussstück einen Gewindestutzen und der Differenzdrucksensor eine Überwurfmutter auf, mit Hilfe derer der Differenzdrucksensor an dem Anschlussstück befestigt wird. Eine derartige Schnellkupplung ermöglicht eine einfache und druckdichte Befestigung des Differenzdrucksensors.

Weiterhin kann gemäß einer Weiterbildung vorgesehen sein, dass die Mittel zum lagerichtigen Verbinden der Wirkdruckkanäle mit dem Differenzdrucksensor mindestens eine Bohrung und einen damit verbindbaren Zapfen aufweisen. Hiermit lässt sich sicherstellen, dass der Differenzdrucksensor in der richtigen Ausrichtung montiert wird.

Bevorzugte Mittel hierzu sind wenigstens eine Kodierbohrung und ein Kodierzapfen, wobei die Kodierbohrung in dem drucktragenden Gehäuseteil oder in dem Differenzdrucksensor vorgesehen sein kann und der Kodierzapfen in dem jeweils anderen Bauteil. Eine besonders bevorzugte Ausführungsform sieht die Anordnung der Kodierbohrung in dem drucktragenden Gehäuseteil sowie die des Kodierzapfens in dem Differenzdrucksensor vor.

Zum Schutz des drucktragenden Gehäuseteils bei abgenommenen Differenzdrucksensor ist bevorzugt eine Schraubkappe vorgesehen, die den Anschlussbereich zum Differenzdrucksensor abschließt. Hierdurch lässt sich eine mechanische Beschädigung sowie eine Verschmutzung des Anschlussbereichs verhindern.

Bevorzugt weist das drucktragende Gehäuseteil einen Düseneinsatz auf, wobei der eine Wirkdruckkanal im Bereich des Düseneinsatzes in die Messstrecke mündet.

Der Düseneinsatz ist bevorzugt als Venturidüseneinsatz ausgebildet. Der Düseneinsatz kann einstückig in dem Gehäuseteil vorgesehen sein oder als austauschbarer Düseneinsatz.

Der Differenzdrucksensor weist wenigstens zwei mit den wenigstens zwei Wirkdruckkanälen verbindbare Sensorkammern auf. Auf diese Weise lässt sich der Differenzdruck entlang der Messstrecke besonders einfach feststellen.

Ein weiterer unabhängiger Gegenstand betrifft eine Maschine mit einer Vorrichtung gemäß der zuvor beschriebenen Erfindung. Eine derartige Maschine erlaubt die einfache Überwachung der mediumführenden Systeme im laufenden Betrieb mit hoher Zuverlässigkeit.

### Kurzbeschreibung der Figuren

Die Erfindung wird anhand eines Ausführungsbeispiels erläutert. Dabei zeigen schematisch:
- Fig. 1: eine erfindungsgemäße Vorrichtung mit montiertem Differenzdrucksensor;
- Fig. 2: einen Schnitt durch die Vorrichtung entlang der Schnittlinie A-A gemäß Fig. 1;
- Fig. 3: einen Schnitt durch die erfindungsgemäße Vorrichtung entlang der Schnittlinie B-B gemäß Fig. 2;
- Fig. 4: ein drucktragendes Gehäuseteil der Vorrichtung ohne montiertem Differenzdrucksensor sowie
- Fig. 5: ein Differenzdrucksensor gemäß der Erfindung.

### Ausführungsbeispiel

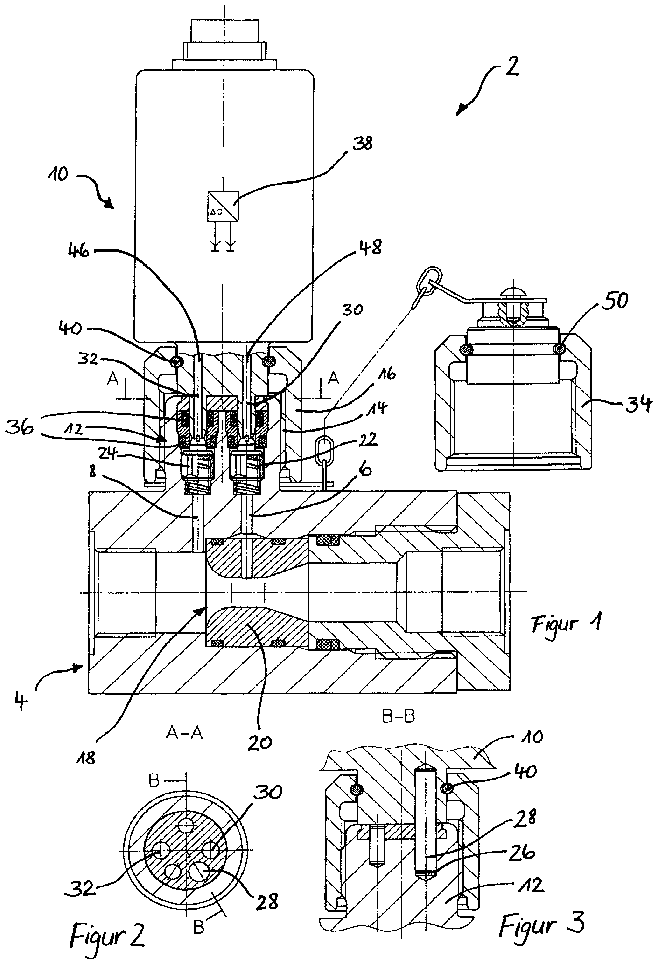

Fig. 1 zeigt eine erfindungsgemäße Vorrichtung 2 zur Messung des Volumen- oder Massenstromes eines Mediums nach dem Wirkdruckverfahren. Die Vorrichtung ist als Durchfluss-Messeinrichtung mit einer Q-Diagnose-Messkupplung ausgebildet und kann für unterschiedliche Volumenströme ausgelegt werden, beispielsweise 2 bis 40 Liter pro Minute, 5 bis 100 Liter pro Minute oder 30 bis 600 Liter pro Minute. Die erfindungsgemäße Vorrichtung 2 lässt sich ohne Weiteres auf Druckbereiche bis 650 bar auslegen. Die dargestellte Vorrichtung 2 ist auf flüssige Betriebsmedien ausgelegt, wie Hydrauliköle, HFC-Flüssigkeiten oder Wasser. Selbstverständlich lässt sich die Vorrichtung mit Vorteil auch für gasförmige Medien einsetzen.

Die erfindungsgemäße Vorrichtung 2 weist ein drucktragendes Gehäuseteil 4 auf, durch das das zu messende Medium fließt. Zur Messung zweier Wirkdrücke sind zwei Wirkdruckkanäle 6, 8 vorgesehen, über die ein Differenzdrucksensor 10 mit den am jeweiligen Ort herrschenden Wirkdruck beaufschlagbar ist.

Der Differenzdrucksensor 10 ist von dem drucktragenden Gehäuseteil 4 abnehmbar gestaltet. Zur Montage des Differenzdrucksensors 10 ist an dem drucktragenden Gehäuseteil 4 ein Anschlussstück 12 vorgesehen, das zur Befestigung des Differenzdrucksensors 10 einen Gewindestutzen 14 aufweist. Der Differenzdrucksensor 10 weist seinerseits eine Überwurfmutter 16 auf, mit Hilfe derer eine Schraubverbindung des Differenzdrucksensors 10 mit dem Gewindestutzen 14 des Anschlussstücks 12 des Gehäuseteils 4 möglich und eine Schnellkupplung zur Verfügung gestellt ist.

Die beiden Wirkdruckkanäle 6, 8 definieren eine Messstrecke 18, entlang derer eine Messung zweier Wirkdrücke vorgenommen wird. Der eine Wirkdruckkanal 6 mündet dabei in einem in dem drucktragenden Gehäuseteil 4 vorgesehenen Venturidüseneinsatz 20, wodurch ein Unterschied in den herrschenden Wirkdrücken, die in den Wirkdruckkanälen 6, 8 herrschen, erzielt wird. Die Wirkdruckdifferenz ist von dem Volumen- bzw. Massenstrom des durchfließenden Mediums abhängig.

In den Wirkdruckkanälen 6, 8 sind mechanisch entsperrbare Rückschlagventile 22, 24 vorgesehen, die bei demontiertem Differenzdrucksensor 10 die Wirkdruckkanäle 6, 8 sperren und einen Austritt des Mediums über die Wirkdruckkanäle 6, 8 verhindern. Die mechanisch entsperrbaren Rückschlagventile 22, 24 werden durch die Montage des Differenzdrucksensors 10 entsperrt.

Zum Anschluss des Differenzdrucksensors 10 und zum Entsperren der Rückschlagventile 22, 24 sind an dem Differenzdrucksensor 10 Hohlzapfen 30, 32 vorgesehen, die in die Wirkdruckkanäle 6, 8 hineinragen und die mit ihren Stirnseiten die Rückschlagventile 22, 24 in Öffnungsstellung betätigen. Auf diese Weise ist jeweils eine Wirkverbindung zwischen den Wirkdruckkanälen 6, 8 und dem Differenzdrucksensor 10 hergestellt.

Zur Abdichtung der Verbindung zwischen Differenzdrucksensor 10 und drucktragendem Gehäuseteil 4 sind O-Ringe 36 vorgesehen, die die Hohlzapfen 30, 32 gegen die Wirkdruckkanäle 6, 8 und die Überwurfmutter 16 gegen das Anschlussstück 12 abdichten. Die Dichtungen 36 sind derart angeordnet, dass beim Anschließen des Differenzdrucksensors 10 die Dichtnippel 30, 32 mit den Dichtungen 36 in Wirkstellung treten, bevor die Rückschlagventile 22, 24 in Öffnungsstellung gelangen.

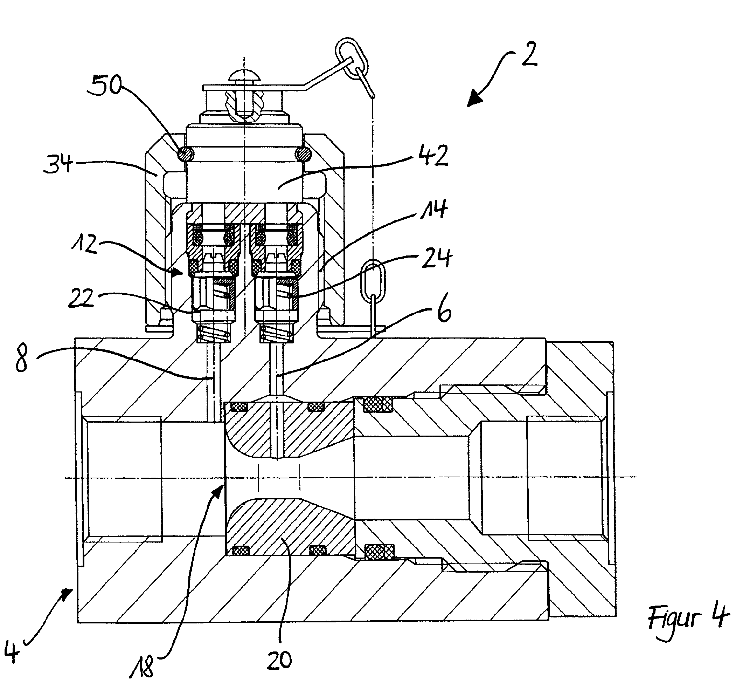

Eine an dem drucktragenden Gehäuseteil 4 befestigte Schraubkappe 34 dient zum Abdichten des Anschlussstücks 12 bei demontiertem Differerenzdrucksensor 10, siehe hierzu Fig. 4.

Im Betrieb einer Maschine, in der die erfindungsgemäße Vorrichtung 2 angeordnet ist, ist der Differenzdrucksensor 10 im Regelfalle demontiert und wird separat aufbewahrt. Die Schraubkappe 34 ist, wie in Fig. 4 dargestellt, auf den Gewindestutzen 14 des Anschlussstücks 12 des drucktragenden Gehäuseteils 4 aufgeschraubt. Die Wirkdruckkanäle 6, 8 sind durch die Rückschlagventile 22, 24 geschlossen.

Ist eine Messung des Volumen- oder Massenstroms des Mediums gewünscht, wird die Schraubkappe 34 abgeschraubt und der Differenzdrucksensor 10 auf das Anschlussstück 12 aufgesetzt und mittels der Überwurfmutter 16 an dem Gewindestutzen 14 des Anschlussstücks 12 montiert. Die Hohlzapfen 30, 32 werden in die Wirkdruckkanäle 6, 8 eingeführt und öffnen mit ihren Stirnseiten die Rückschlagventile 22, 24, sodass eine Wirkverbindung zwischen der Messstrecke 18 und Sensorkammern 38 des Differenzdrucksensors 10 hergestellt ist. Dabei wird über die als O-Ringe ausgebildeten Dichtungen 36 eine Abdichtung der zwischen Wirkdruckkanäle 6, 8 und Messkanäle 46, 48 des Differenzdrucksensors 10 erreicht. Im Anschluss kann die Durchflussmenge gemessen werden. Hierbei wird verhindert, dass das Fluid bei der Montage des Differenzdrucksensors 10 austritt.

Nach erfolgter Messung wird der Differenzdrucksensor 10 wieder abgenommen, die Rückschlagventile 22, 24 sperren automatisch und die Schraubkappe 34 wird aufgesetzt.

Fig. 2 zeigt einen Schnitt entlang der Schnittlinie A-A durch den Anschlussbereich von drucktragendem Gehäuseteil 4 und Differenzdrucksensor 10 gemäß Fig. 1.

Neben den Hohlzapfen 30, 32 ist in dem dargestellten Querschnitt ein Kodierzapfen 28 vorgesehen, mit Hilfe dessen sowie der dazugehörigen Kodierbohrung 26 bewerkstelligt wird, dass der Differenzdrucksensor 10 ausschließlich lagerichtig auf dem drucktragenden Gehäuseteil 4 montiert werden kann. Die Hohlzapfen 30, 32 und der Kodierzapfen 28 sind hierzu nicht symmetrisch über den Querschnitt verteilt.

Fig. 3 zeigt einen weiteren Schnitt durch die Vorrichtung 2 im Anschlussbereich entlang der Schnittlinie B-B gemäß Fig. 2.

In dem Anschlussstück 12 ist die dem Kodierzapfen 28 in Lage, Tiefe und Durchmesser angepasste Kodierbohrung 26 vorgesehen, sodass der Kodierzapfen 28 exakt in die Kodierbohrung 26 hineinragt. Der Kodierzapfen 28 ist in dem Differenzdrucksensor 10 festgelegt.

Fig. 4 zeigt die erfindungsgemäße Vorrichtung 2 mit demontiertem Differenzdrucksensor 10. Zum Schutz des Anschlussstücks 12 ist die Schraubkappe 34 auf den Gewindestutzen 14 aufgeschraubt. Die Rückschlagventile 22, 24 sind geschlossen. Zum Abdichten des Anschlussstücks 12 weist die Schraubkappe 34 einen Stempel 42 mit Dichtung auf.

Mit 50 ist ein Sicherungsring bezeichnet, der die Verdrehbarkeit der Überwurfmutter 16 gegenüber dem Anschlussstück 12 des Differenzdrucksensors 10 beim An- und Entkuppeln ermöglicht. Die Schraubkappe 34 ist ebenfalls mittels eines Sicherungsringes 50 an dem Stempel 42 verdrehbar gehalten.

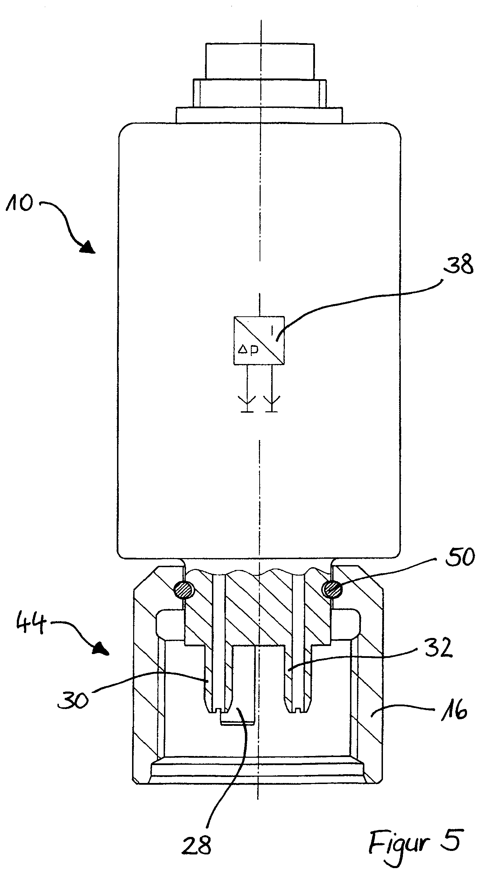

Fig. 5 zeigt den Differenzdrucksensor 10 der erfindungsgemäßen Vorrichtung 2 separat.

Eine Öffnungsarmatur 44, gebildet aus den bereits beschriebenen Bestandteilen Überwurfmutter 16, Hohlzapfen 30, 32, Kodierzapfen 28, ist dabei im Schnitt dargestellt.

Die Hohlzapfen 30, 32 sind mit den Sensorkammern 38 strömungsverbunden. Die Sensorkammern 38 nehmen über jeden Hohlzapfen 30, 32 einen Druck auf und eine Druckdifferenz wird ermittelt.

Ein üblicher Differenzdruck liegt zwischen 0 und 2 bar, abhängig von dem jeweiligen Volumen- bzw. Massenstrom und der konkreten Ausgestaltung des Venturidüseneinsatzes 20.

Der Differenzdruck kann in unterschiedlichen Ausführungsformen z.B. elektrisch an eine Auswerteeinheit weitergegeben werden und/oder auf dem Differenzdrucksensor über geeignete Anzeigemittel angezeigt werden.

### Bezugszeichenliste

- 2: Vorrichtung
- 4: Drucktragendes Gehäuseteil
- 6: Wirkdruckkanal
- 8: Wirkdruckkanal
- 10: Differenzdrucksensor
- 12: Anschlussstück
- 14: Gewindestutzen
- 16: Überwurfmutter
- 18: Messstrecke
- 20: Venturidüseneinsatz
- 22: Rückschlagventil
- 24: Rückschlagventil
- 26: Kodierbohrung
- 28: Kodierzapfen
- 30: Hohlzapfen
- 32: Hohlzapfen
- 34: Schraubkappe
- 36: Dichtung
- 38: Sensorkammern
- 40: Sicherungsring
- 42: Stempel
- 44: Öffnungsarmatur
- 46: Messkanal
- 48: Messkanal
- 50: Sicherungsring

## Patentansprüche

1. Vorrichtung zur Messung des Volumen- oder Massestromes eines Mediums nach dem Wirkdruckverfahren, mit einem drucktragenden Gehäuseteil (4) mit einer Messstrecke (18), in die wenigstens zwei Wirkdruckkanäle (6, 8) münden, wobei ein mit den Wirkdruckkanälen (6, 8) in Wirkverbindung bringbarer Differenzdrucksensor (10) vorgesehen ist, wobei die Wirkdruckkanäle (6, 8) über eine gemeinsame Kupplung mit einer Gegenkupplung des Differenzdrucksensors (10) verbindbar und dass Mittel zum lagesicheren Anschließen der Wirkdruckkanäle (6, 8) mit dem Differenzdrucksensor (10) vorgesehen sind, wobei Mittel zum Kuppeln der Wirkdruckkanäle (6, 8) mit dem Differenzdrucksensor (10) unter Betriebsdruck vorgesehen sind und diese Mittel mechanisch entsperrbare Rückschlagventile (22, 24) aufweisen, welche in den Wirkdruckkanälen (6, 8) angeordnet sind, wobei eine Entsperrung der Rückschlagventile durch Montage des Differenzdrucksensors (10) am Gehäuseteil (4) erreicht wird und der Differenzdrucksensor (10) in Kuppelstellung mittels Dichtnippel (30, 32) mit den Wirkdruckkanälen (6, 8) verbindbar ist, wobei die Rückschlagventile (22, 24) mittels der zugeordneten Dichtnippel (30, 32) in Offenstellung bringbar sind.

2. Vorrichtung nach Anspruch 1, **dadurch gekennzeichnet, dass** die Kupplung ein die Wirkdruckkanäle (6, 8) umfassendes Anschlussstück (12) des drucktragenden Gehäuseteils (4) aufweist.

3. Vorrichtung nach Anspruch 1 oder 2, **dadurch gekennzeichnet, dass** die Gegenkupplung ein die Messkanäle (46, 48) des Differenzdrucksensors (10) umfassendes Gegenanschlussstück aufweist.

4. Vorrichtung nach einem der vorangegangenen Ansprüche, **dadurch gekennzeichnet, dass** die Dichtnippel als Hohlzapfen (30, 32) ausgebildet sind.

5. Vorrichtung nach einem der vorhergehenden Ansprüche, **dadurch gekennzeichnet, dass** die Kupplungsmittel Dichtungen (36) aufweisen, welche in Kuppelstellung des Differenzdrucksensors die Wirkdruckkanäle (6, 8) mit den zugeordneten Dichtnippeln (30, 32) abdichten.

6. Vorrichtung nach Anspruch 5, **dadurch gekennzeichnet, dass** die als O-Ringe ausgebildeten Dichtungen (36) derart angeordnet sind, dass beim Anschliessen des Differenzdrucksensors (10) die Dichtnippel (30, 32) mit den Dichtungen (36) in Wirkstellung treten, bevor die Rückschlagventile (22, 24) in Offenstellung gelangen.

7. Vorrichtung nach einem der Ansprüche 3 oder 4, **dadurch gekennzeichnet, dass** das Anschlussstück (12) einen Gewindestutzen (14) und das Gegenanschlussstück des Differenzdrucksensors (10) eine Überwurfmutter (16) zum Befestigen des Differenzdrucksensors (10) an dem Anschlussstück (12) aufweisen.

8. Vorrichtung nach einem der vorhergehenden Ansprüche, **dadurch gekennzeichnet, dass** eine Schraubkappe (34) zum Verschließen des Gehäuseteils (4) bei abgenommenem Differenzdrucksensor (10) vorgesehen ist.

9. Vorrichtung nach einem der vorhergehenden Ansprüche, **dadurch gekennzeichnet, dass** das Gehäuseteil (4) einen Düseneinsatz, bevorzugt Venturidüseneinsatz (20), aufweist, wobei der eine Wirkdruckkanal (6) im Bereich des Düseneinsatzes (20) in die Messstrecke (18) mündet.

10. Vorrichtung nach einem der vorhergehenden Ansprüche, **dadurch gekennzeichnet, dass** der Differenzdrucksensor (10) wenigstens zwei mit den wenigstens zwei Wirkdruckkanälen (6, 8) verbindbare Sensorkammern (38) aufweist.

11. Maschine mit einem Strömungssystem, aufweisend eine Vorrichtung (2) nach einem der vorhergehenden Ansprüche.

## Claims

1. Device for measuring the volume flow or mass flow of a medium based on the differential pressure method, comprising a pressure-bearing housing part (4) with a measuring section (18) into which at least two differential pressure channels (6, 8) lead, wherein a differential pressure sensor (10) that can be brought into operative connection with the differential pressure channels (6, 8) is provided, wherein the differential pressure channels (6, 8) can be connected to a mating coupling of the differential pressure sensor (10) via a common coupling, and in that means for connecting the differential pressure channels (6, 8) to the differential pressure sensor (10) in a positionally secured manner are provided, wherein means for coupling the differential pressure channels (6, 8) with the differential pressure sensor (10) at operating pressure are provided, and these means have check valves (22, 24) that can be unblocked in a mechanical manner and that are arranged inside the differential pressure channels (6, 8), wherein an unblocking of the check valves is achieved by mounting the differential pressure sensor (10) at the housing part (4), and the differential pressure sensor (10) can be connected to the differential pressure channels (6, 8) in the coupling position by means of sealing nipples (30, 32), wherein the check valves (22, 24) can be brought into the open position by means of the associated sealing nipples (30, 32).

2. Device according to claim 1, **characterized in that** the coupling has a connecting piece (12) of the pressure-bearing housing part (4) that encloses the differential pressure channels (6, 8).

3. Device according to claim 1 or 2, **characterized in that** that the mating coupling has a counter connecting piece that encloses the measuring channels (46, 48) of the differential pressure sensor (10).

4. Device according to any of the preceding claims, **characterized in that** the sealing nipples are embodied as hollow pins (30, 32).

5. Device according to any of the preceding claims, **characterized in that** the coupling means have seals (36) which seal the differential pressure channels (6, 8) with the associated sealing nipples (30, 32) in the coupling position of the differential pressure sensor.

6. Device according to claim 5, **characterized in that** the seals (36) that are embodied as O-rings are arranged in such a manner that, when the differential pressure sensor (10) is connected, the sealing nipples (30, 32) enter into operating position with the seals (36) before the check valves (22, 24) are brought into the open position.

7. Device according to any of the claims 3 or 4, **characterized in that** the connecting piece (12) has a threaded connection (14) and the counter connecting piece of the differential pressure sensor (10) has a cap nut (16) for attaching the differential pressure sensor (10) at the connecting piece (12).

8. Device according to any of the preceding claims, **characterized in that**, when the differential pressure sensor (10) is taken off, a screw cap (34) for closing the housing part (4) is provided.

9. Device according to any of the preceding claims, **characterized in that** the housing part (4) has a nozzle insert, preferably a Venturi nozzle insert (20), wherein the one differential pressure channel (6) leads into the measuring section (18) in the area of the nozzle insert (20).

10. Device according to any of the preceding claims, **characterized in that** the differential pressure sensor (10) has at least two sensor chambers (38) that can be connected to the at least two differential pressure channels (6, 8).

11. Machine with a flow system, comprising a device (2) according to any of the preceding claims.

## Revendications

1. Dispositif de mesure du flux volumique ou massique d'un milieu selon le procédé de la pression différentielle, avec une partie de boîtier (4) sous pression avec un trajet de mesure (18) dans lequel débouchent au moins deux canaux de pression différentielle (6, 8), un capteur de pression différentielle (10) qui peut être amené en interaction avec les canaux de pression différentielle (6, 8) étant prévu, les canaux de pression différentielle (6, 8) pouvant être raccordés à un contre-accouplement du capteur de pression différentielle (10) par le biais d'un accouplement commun, et des moyens destinés à la jonction, de façon maintenue en position, des canaux de pression différentielle (6, 8) avec le capteur de pression différentielle (10) étant prévus,
des moyens destinés à accoupler les canaux de pression différentielle (6, 8) avec le capteur de pression différentielle (10) sous pression de service étant prévus, et ces moyens présentant des clapets antiretour (22, 24) pouvant être débloqués mécaniquement qui sont disposés dans les canaux de pression différentielle (6, 8), un déblocage des clapets antiretour étant obtenu par le montage du capteur de pression différentielle (10) sur la partie de boîtier (4), et le capteur de pression différentielle (10) pouvant, dans la position d'accouplement, être raccordé aux canaux de pression différentielle (6, 8) par le biais d'embouts d'étanchéité (30, 32), les clapets antiretour (22, 24) pouvant être amenés dans la position ouverte au moyen des embouts d'étanchéité (30, 32) affectés.

2. Dispositif selon la revendication 1, **caractérisé en ce que** l'accouplement présente une pièce de jonction (12), entourant les canaux de pression différentielle (6, 8), de la partie de boîtier (4) sous pression.

3. Dispositif selon la revendication 1 ou 2, **caractérisé en ce que** le contre-accouplement présente une pièce de contre-jonction entourant les canaux de mesure (46, 48) du capteur de pression différentielle (10) .

4. Dispositif selon l'une des revendications précédentes, **caractérisé en ce que** les embouts d'étanchéité sont constitués en tant que tenons creux (30, 32).

5. Dispositif selon l'une des revendications précédentes, **caractérisé en ce que** les moyens d'accouplement présentent des joints d'étanchéité (36) qui, dans la position d'accouplement du capteur de pression différentielle, réalisent l'étanchéité des canaux de pression différentielle (6, 8) avec les embouts d'étanchéité (30, 32) affectés.

6. Dispositif selon la revendication 5, **caractérisé en ce que** les joints d'étanchéité (36) constitués en tant que joints toriques sont disposés de telle sorte que, lors de la jonction du capteur de pression différentielle (10), les embouts d'étanchéité (30, 32) entrent dans une position opératoire avec les joints d'étanchéité (36) avant que les clapets antiretour (22, 24) arrivent dans la position d'ouverture.

7. Dispositif selon l'une des revendications 3 et 4, **caractérisé en ce que** la pièce de jonction (12) présente un raccord fileté (14), et la pièce de contre-jonction du capteur de pression différentielle (10) présente un écrou-raccord (16) destiné à la fixation du capteur de pression différentielle (10) sur la pièce de jonction (12).

8. Dispositif selon l'une des revendications précédentes, **caractérisé en ce qu'**il est prévu un capuchon à vis (34) destiné à la fermeture de la partie de boîtier (4) quand le capteur de pression différentielle (10) est enlevé.

9. Dispositif selon l'une des revendications précédentes, **caractérisé en ce que** la partie de boîtier (4) présente un insert de buse, de préférence un insert de buse de Venturi (20), un canal de pression différentielle (6) débouchant dans la zone de l'insert de buse (20) dans le trajet de mesure (18).

10. Dispositif selon l'une des revendications précédentes, **caractérisé en ce que** le capteur de pression différentielle (10) présente au moins deux chambres de capteur (38) pouvant être raccordées aux au moins deux canaux de pression différentielle (6, 8).

11. Machine avec un système d'écoulement, présentant un dispositif (2) selon l'une des revendications précédentes.
